# EUROPÄISCHE PATENTSCHRIFT

(11) **EP 3 218 628 B1**
(45) Veröffentlichungstag und Bekanntmachung des Hinweises auf die Patenterteilung: **26.09.2018**
(21) Anmeldenummer: 15794825.8
(22) Anmeldetag: 10.11.2015
(51) Int. Cl.: F16L 3/137

(54) **BEFESTIGUNGSVORRICHTUNG**
FASTENING DEVICE
DISPOSITIF DE FIXATION

(30) Priorität: 13.11.2014 DE 102014016726
(43) Veröffentlichungstag der Anmeldung: 20.09.2017
(73) Patentinhaber: Hellermann Tyton AB, 164 40 Kista (SE)
(72) Erfinder: OTTERSTRÖM, Måns, 42737 Billdal (SE)
(74) Vertreter: Robert, Vincent
(86) Internationale Anmeldenummer: PCT/EP2015/002253
(87) Internationale Veröffentlichungsnummer: WO 2016/074786

(56) Entgegenhaltungen:
- DE-A1-102004 020 021
- US-A- 3 552 696

## Beschreibung

Die vorliegende Erfindung betrifft eine Befestigungsvorrichtung gemäß dem Oberbegriff von Anspruch 1.
Um Elemente wie Kabel, Leitungen oder daraus gebildete Bündel an einem Träger bzw. Trägersubstrat, insbesondere in Form einer Kraftfahrzeugkarosserie, zu befestigen bzw. zu montieren, sind verschiedene, mit Bindern oder Kabelbindern zusammenwirkende Befestigungsvorrichtungen bekannt. Derartige Lösungen sehen häufig das Verrasten am Träger eingebracht in eine Bohrung desselben vor, wobei Toleranzen in der Stärke des Trägersubstrats, zum Beispiel einem umgeformten Metallblech, jedoch kaum ausgleichbar sind. Um dennoch eine positionstreue und bevorzugt spielfreie Fixierung zu ermöglichen, wird zumeist auf zuverlässigere Lösungen wie zum Beispiel Schraublösungen zurückgegriffen, welche aber einen hohen Handlingaufwand sowohl vor als auch während der Montage mit sich bringen, insbesondere als solche Befestigungsvorrichtungen meist mehrteilig sind (z.B. Schrauben-Mutter-Lagerschale-Scheibe-Verbindungen). Auch sind solche Lösungen kostspielig. US 3 552 696 A offenbart eine Befestigungsvorrichtung, die dazu bereit gestellt ist, Kabel, Leitungen oder dergleichen längliche Gebilde an einem Trägersubstrat zu montieren. Ausgehend hiervon liegt der vorliegenden Erfindung die Aufgabe zugrunde, eine Befestigungsvorrichtung anzugeben, welche mit vorteilhaft geringem Handlingaufwand einhergeht, zuverlässig am Trägersubstrat fixierend montierbar und zudem kostengünstig ist.
Diese Aufgabe wird mit einer Befestigungsvorrichtung nach Anspruch 1 gelöst. Weitere vorteilhafte Ausgestaltungen und Weiterbildungen der Erfindung sind in den weiteren Ansprüchen angegeben.
Vorgeschlagen wird erfindungsgemäß eine Befestigungsvorrichtung. Die Befestigungsvorrichtung ist dazu bereit gestellt, Kabel, Leitungen, Bündel daraus oder dergleichen längliche Gebilde an einem Trägersubstrat zu montieren, d.h. daran fixieren zu können, insbesondere auch mit einer vorgegebenen Ausrichtung. Die Befestigungsvorrichtung ist bevorzugt zur Verbindung mit einem Träger(substrat) in Form eines Karosserieteils vorgesehen, zum Beispiel zur Verbindung mit einem Blech, einem Tragrahmen oder -balken, zum Beispiel eines Kraftfahrzeugs wie einem Automobil, einem Schiff oder einem Luftfahrzeug. Daneben sind jedoch auch andere Anwendungsgebiete denkbar.

Die erfindungsgemäße Befestigungsvorrichtung, welche bevorzugt aus Kunststoff gefertigt ist, weist ein Einsteckteil bzw. Einsteckelement mit einem Schaftabschnitt und einem Kopfabschnitt auf. Das Einsteckteil ist bevorzugt bolzenförmig gebildet, insbesondere mit einem Schaftabschnitt in Form eines Rundschafts und weiterhin insbesondere mit einem Kopfabschnitt, welcher an einem Ende des Schaftabschnitts angeordnet ist. Bevorzugt überkragt der Kopfabschnitt den Schaftabschnitt hierbei, z.B. haubenförmig, insbesondere in Form einer U-Haube (wobei der Grund der U-Form mit dem Schaftabschnitt verbunden ist und die Schenkel der U-Form zu einem freien Ende des Schaftabschnitts ragen). Der den Schaftabschnitt überkragende Kopfabschnitt kann somit Kontaktelemente bzw. Kontaktzungen ausbilden, insbesondere in Form der Schenkel, welche für einen Eingriff an einem Trägersubstrat vorgesehen sind.

Die Befestigungsvorrichtung weist weiterhin ein Basisteil bzw. Basiselement mit einer Anlageoberfläche und einer dazu entgegen gesetzten Halterungsseite auf. Die Anlageoberfläche ist bevorzugt an einem chassis- bzw. einfassungsförmigen Abschnitt des Basisteils gebildet und dazu bereitgestellt, an einem - vorzugsweise planen oder plattenförmigen - Trägersubstrat in Anlage daran zu gelangen.

Demgegenüber ist vorgesehen, halterungsseitig ein mittels der Befestigungsvorrichtung am Trägersubstrat zu befestigendes Verrzurrgut, i.e. ein Kabel, eine Leitung, ein Bündel daraus o.ä., aufzunehmen, insbesondere zu haltern. An der Halterungsseite kann das Basisteil hierfür eine Aufnahmeform für Verzurrgut bilden, z.B. wannen-, schalenförmig oder konkav geformt sein, wobei die Aufnahme an den chassisförmigen Abschnitt angeformt sein kann.

Das Basisteil umfasst weiterhin eine Anzahl Rastbeine, welche zur Verrastung in bzw. an einer Öffnung, i.e. einer Montageöffnung/Bohrung, eines Trägersubstrats bereitgestellt sind und seitens der Anlageoberfläche abragen. Das derart gebildete Basisteil ist mit dem bevorzugt steckstiftförmigen Einsteckteil steckverbindbar durch Einstecken des Schaftabschnitts in einen Steckkanal des Basisteils seitens der Halterungsseite. Eine mit der Erfindung vorgesehene Einsteckrichtung weist hierbei weiterhin von der Halterungsseite zur Anlageoberfläche.

Der Steckkanal - sich in Einsteckrichtung erstreckend - ist bevorzugt mittels der Rastbeine definiert, insbesondere inmitten derselben bzw. von denselben umfangen gebildet, wobei die Rastbeine im Rahmen der vorliegenden Erfindung zum Beispiel eine Ringanordnung, insbesondere eine segmentierte Ringanordnung bilden, d.h. sich anlageseitig von dem Basisteil wegerstreckend. Um das Einsteckteil seitens der Halterungsseite in den mittels der Rastbeine definierten Steckkanal einbringen zu können, ist dessen Mündung seitens der Halterungsseite zugänglich. Die Mündung kann zum Beispiel an einem anlageseitigen Bodenelement des Basisteils gebildet sein, z.B. einem Steg- oder Brückenelement, während der weitere Innenraum des Basisteils im Wesentlichen - gewichtsreduzierend - freigespart sein kann.

Bevorzugt sind Ausführungsformen, bei welchen der Steckkanal einen Durchmesser aufweist derart, dass der eingebrachte Schaftabschnitt mit seinem Außenumfang an den Rastbeinen in Anlage gelangt, so dass eine hohe Positionstreue und Stabilität der Verbindung erzielbar ist. Angemerkt sei, dass die zur Steckverbindung von Basisteil und Einsteckteil fähige Ausgestaltung der Befestigungsvorrichtung weiterhin ermöglicht, die Rastbeine vor einer Steckverbindung vorteilhaft einfach nach innen schwenkend verrasten zu lassen, nach einer Steckverbindung ein selbsttätiges Lösen derselben aus der Verrastung mittels des dann daran anliegenden Einsteckteils jedoch verunmöglicht ist.

Zu einer mit der Erfindung beabsichtigten Selbstjustierfähigkeit der Befestigungsvorrichtung beitragend, ist dieselbe weiterhin eingerichtet, den Kopfabschnitt des mit dem Basisteil steckverbundenen Einsteckteils gegen ein an den Rastbeinen verrastetes Trägersubstrat in Eingriff bringen zu können, d.h. insbesondere gegen dasselbe drängen zu können (an einer zur Anlageoberfläche benachbarten Montageseite des Trägersubstrats, entgegen gesetzt zu einer Verrastseite desselben). Vorgesehen ist hierbei ein Eingriff des Kopfabschnitts am Träger via wenigstens ein - wie oben erläutertes - Kontaktelement (in Form einer Kontaktzunge, U-Schenkels oder einer Überkragung), welches hierbei insbesondere auch elastisch bzw. elastisch verformbar und rückstellbar ist. Ein chassisförmiger Abschnitt des Basisteils ist hierbei für den Eingriff des Kontaktelements bevorzugt geeignet geöffnet, d.h. den Kontakt des Kopfabschnitts am Träger ermöglichend.

Erfindungsgemäß ist die Befestigungsvorrichtung - insbesondere für die beabsichtigte Selbstjustierung und/oder Fixierung am Trägersubstrat - weiterhin eingerichtet, einen Binderabschnitt, bevorzugt eines Kabelbinders, über den Kopfabschnitt des steckverbundenen Einsteckteils führen und an dem Basisteil derart festlegen bzw. haltern zu können, dass der Kopfabschnitt bei am Träger(substrat) verrasteter Befestigungsvorrichtung und Verzurren des Binders (bevorzugt um ein Verzurrgut in Anlage an der Halterungsseite) mittels des darüber geführten und verzurrten Binderabschnitts (welcher hierbei gespannt wird) in Einsteckrichtung (des Einsteckteils) gedrängt wird, während das Basisteil (gleichzeitig) in entgegen gesetzte Richtung gedrängt wird.

Um diese erfindungsgemäße Funktionalität bereitzustellen, kann das Basisteil hierbei z.B. an entgegen gesetzten Randbereichen (insbesondere o.a. chassisförmigen Abschnitts) - zwischen welchen der Kopfabschnitt nach Einstecken in den Steckkanal insbesondere angeordnet ist - je eine Durchführung für einen Binder (Binderband) aufweisen, z.B. in Form eines (Führungs-)Schlitzes oder Durchgangs. Die Durchführungen sind dabei bevorzugt derart angeordnet, dass der Kopfabschnitt bei steckverbundenem Einsteckteil entgegen der Einsteckrichtung über die Sichtverbindungslinie der Durchführungen etwas hinausragt, eine Sichtverbindung folglich vereitelt.

Ein durch die (randseitigen) Durchführungen gefädelter und über den dazwischen angeordneten Kopf geführter Binderabschnitt vermag bei Verzurren (Spannen) sodann, eine Druckkraft auf den Kopf auszuüben, welche in Richtung zu dem Trägersubstrat wirkt (hierbei werden Kontaktelemente des Kopfabschnitts insoweit in den Eingriff am Trägersubstrat gezwungen). Insbesondere Lösungen, bei welchen auch das Verzurrgut halterungsseitig in Anlage an dem über den Kopfabschnitt geführten Binderabschnitt gelangen kann, vermögen hierbei eine hohe Andruckkraft zu erzeugen.

Weiterhin wird seitens des verzurrten Binders auch eine zur Druckkraft entgegen gesetzt gerichtete Zugkraft in das Basisteil eingeleitet, d.h. über die Durchführungen am Basisteil, welche die Rastbeine verrastseitig gegen das Trägersubstrat zwingt.

Somit wird das Trägersubstrat mittels des verzurrten Binders von zwei Seiten, i.e. von der Montage- und der Verrastseite, durch die Befestigungsvorrichtung selbsttätig geklemmt.

Mithin werden Fixierkräfte, d.h. eine Druckkraft und eine Gegenkraft (ursächlich bewirkt durch den am Basisteil verzurrten Binder) beidseitig des Trägersubstrats durch die Befestigungsvorrichtung auf das Trägersubstrat ausgeübt. Mit Vorteil geht damit eine dauerhafte Selbstfixierung der Befestigungsvorrichtung bei Verzurren des Binders einher, weiterhin unter vorteilhaft selbsttätigem Ausgleich etwaiger Toleranzen.

Eine bevorzugte Lösung sieht allgemein vor, dass die Befestigungsvorrichtung eingerichtet ist, einen verzurrten Binder mittels der Durchführungen und dem Kopfabschnitt w-förmig zu führen und/oder daran zu haltern.

In Weiterbildung der Befestigungsvorrichtung wird vorgeschlagen, die Befestigungsvorrichtung einteilig zu bilden. Hierdurch ist das Handling äußerst einfach. Die Befestigungsvorrichtung kann durch Spritzgießen gefertigt sein, insbesondere aus Kunststoff und weiterhin insbesondere in einem einzigen Spritzgußschritt, mithin auch einstoffig, so dass auch die Herstellung äußerst unaufwändig und kostengünstig ist.

Insbesondere einteilig ausgebildet ist die Befestigungsvorrichtung weiterhin bevorzugt derart ausgestaltet, dass das Einsteckteil über einen Bandabschnitt mit dem Basisteil verbunden ist. Der Bandabschnitt kann das Einsteckteil - vor einer Montage - am Basisteil vorteilhaft unverlierbar sichern, weiterhin insbesondere auch eine Vorausrichtung des Kopfabschnitts mit dem Basisteil bei einem Einstecken des Steckteils in das Basisteil bewirken.

Eine Vorausrichtung wird zum Beispiel angestrebt bei Lösungen, bei welchen das Einsteckteil einen Kopfabschnitt mit diskreten Kontaktelementen aufweist, welche je mit einer korrespondierenden Freisparung bzw. Öffnung im Basisteil, insbesondere im Chassis zusammenwirken.

Bevorzugte Ausgestaltungen sehen weiterhin vor, dass das Basisteil bzw. dessen chassisförmiger Abschnitt an radial entgegen gesetzten Seiten des Steckkanals je eine Freisparung für ein Kontaktelement des Kopfabschnitts aufweist, durch welche hindurch dieselben gegen das Trägersubstrat drängbar sind.

Weitere Merkmale und Vorteile der Erfindung ergeben sich aus der nachfolgenden Beschreibung von Ausführungsbeispielen der Erfindung, anhand der Figuren der Zeichnungen, die erfindungswesentliche Einzelheiten zeigen, und aus den Ansprüchen. Die einzelnen Merkmale können je einzeln für sich oder zu mehreren in beliebiger Kombination bei einer Variante der Erfindung verwirklicht sein.

Bevorzugte Ausführungsformen der Erfindung werden nachfolgend anhand der beigefügten Zeichnungen näher erläutert. Es zeigen:
Fig. 1 exemplarisch und schematisch in einer Draufsicht eine Befestigungsvorrichtung gemäß einer möglichen Ausführungsform der Erfindung;
Fig. 2 die Befestigungsvorrichtung von Fig. 1 in einer Seitenansicht;
Fig. 3 die Befestigungsvorrichtung nach Fig. 1 und 2 in einer weiteren Seitenansicht;
Fig. 4 eine Draufsicht der Befestigungsvorrichtung nach den Figuren 1 bis 3 in einem Zustand, in welchem das Einsteckteil in das Basisteil eingesteckt ist.
Fig. 5 eine Seitenansicht der Befestigungsvorrichtung in einem Zustand gemäß Fig. 4.
Fig. 6 eine weitere Seitenansicht der Befestigungsvorrichtung in dem Zustand gemäß Fig. 4 und 5.
Fig. 7 bis 10 mögliche Montageschritte mit der Befestigungsvorrichtung und einem zu halternden Verzurrgut, wobei Fig. 7 eine perspektivische Ansicht der Befestigungsvorrichtung gem. Fig. 1 bis 3 zeigt, Fig. 8 eine perspektivische Ansicht der Befestigungsvorrichtung in einem Zustand gemäß der Figuren 4 bis 6, Fig. 9 die Befestigungsvorrichtung mit einem über den Kopfabschnitt geführtem Binderabschnitt, sowie Fig. 10 die Befestigungsvorrichtung mit am Verzurrgut sowie der Befestigungsvorrichtung verzurrtem Binder.
Fig. 11 eine Seitenansicht der Anordnung gem. Fig. 10, wobei die Befestigungsvorrichtung weiterhin an einem Trägersubstrat festgelegt ist.
Fig. 12 eine Schnittansicht der Anordnung gemäß Fig. 11, wobei der Schnitt entlang einer Linie B-B geführt ist.
Fig. 13 eine vergrößerte Ansicht eines Details aus Fig. 12, wobei die im Zuge der Montage der Befestigungsvorrichtung resultierenden Kräfte exemplarisch veranschaulicht sind.

In der nachfolgenden Beschreibung und den Zeichnungen entsprechen gleichen Bezugszeichen Elemente gleicher oder vergleichbarer Funktion.

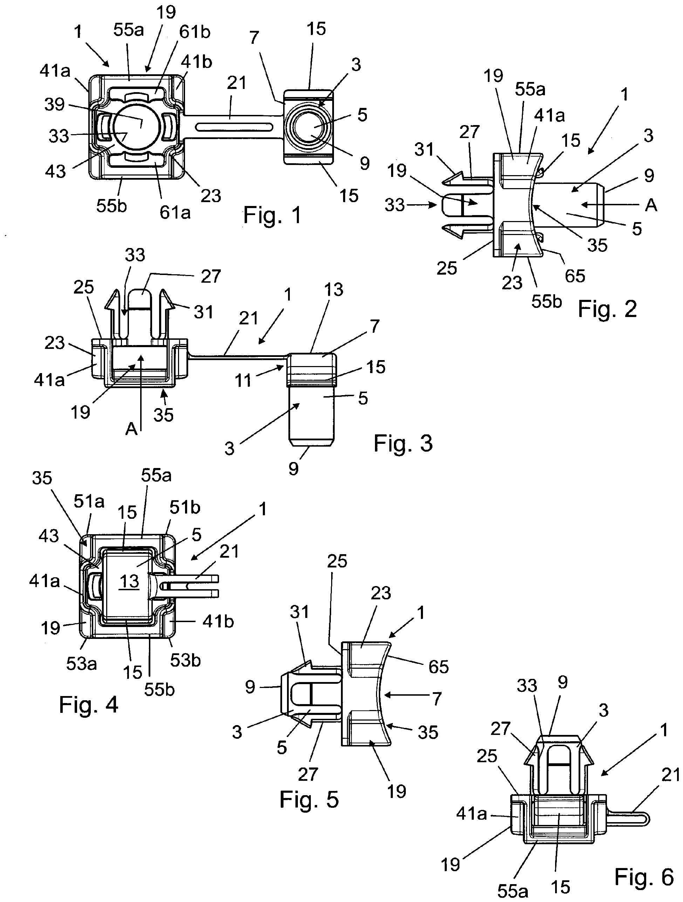

Die Figuren 1 bis 13 zeigen je eine erfindungsgemäße Befestigungsvorrichtung 1.

Die Befestigungsvorrichtung 1, welche sämtlich aus Kunststoff gefertigt, insbesondere spritzgegossen ist, weist, s. z.B. Figs. 1 bis 3, ein Einsteckelement bzw. Einsteckteil 3 auf, welches in Form eines Einsteckstifts gebildet ist und einen Schaft(abschnitt) 5 und einen Kopf(abschnitt) 7 umfasst. Der Schaftabschnitt 5 ist im Wesentlichen rundschaft- bzw. bolzenförmig, insbesondere hohlzylindrisch gebildet.

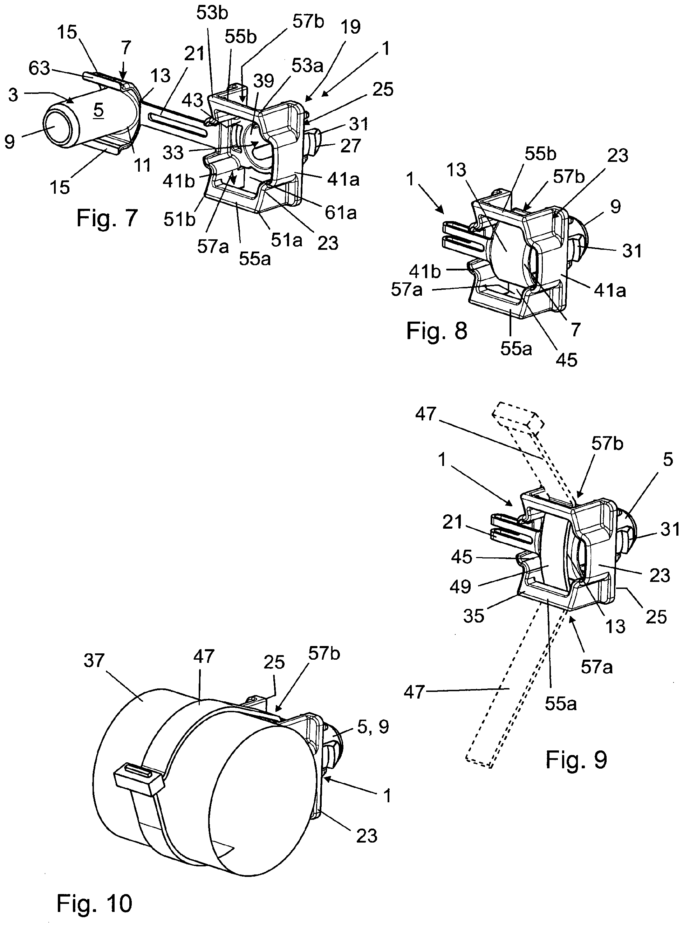

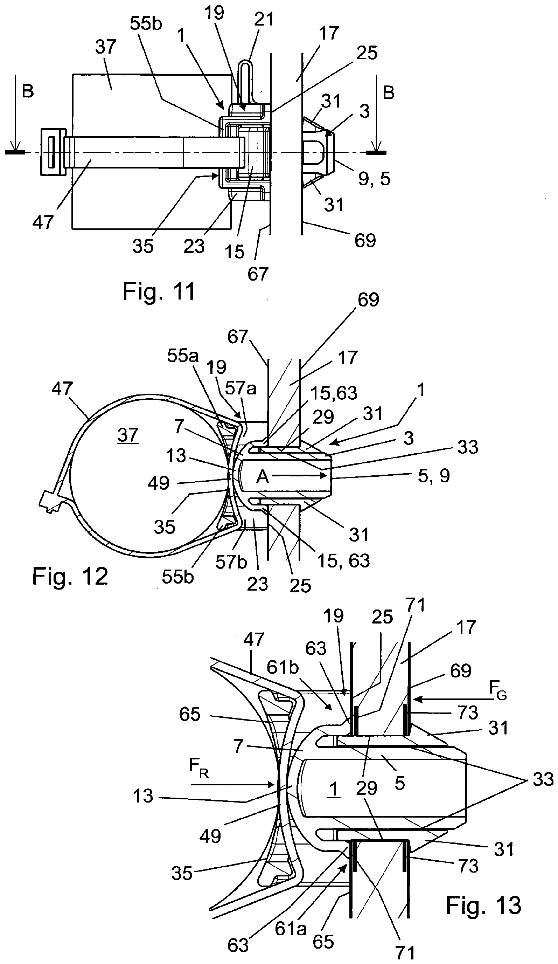

Entgegengesetzt zu einem freien Ende 9 des Schaftabschnitts 5 ist der Kopfabschnitt 7 an einem weiteren Ende 11 des Schaftabschnitts 5 angeformt. Der Kopfabschnitt 7 überkragt den Schaftabschnitt 5 und ist gleichsam einer U-förmigen Haube gebildet bzw. ausgeformt, s. z.B. auch Fig. 7, d.h. mit einem zentralen, mit dem Schaftabschnitt 5 integral gebildeten Abschnitt 13, von welchem zwei (U-)Schenkel 15 sich in Richtung hin zum freien Ende 9 erstreckend abragen, d.h. mit radialem Abstand zum Schaftabschnitt 5. Die Schenkel 15 bilden somit - flügelähnliche - Kontaktelemente bzw. -zungen des Einsteckteils 3, welche für die Kontaktierung des Kopfabschnitts 7 an einem Trägersubstrat 17 (z.B. Figs. 11 bis 13) bzw. zur Anlage daran vorgesehen sind (wie nachfolgend noch näher erläutert). Die die Schenkel 15 bildenden Anformungen sind insbesondere biegeelastisch. Der zentrale Abschnitt 13 ist weiterhin konvex gewölbt, s. z.B. Fig. 8.

Die Befestigungsvorrichtung 1 umfasst weiterhin ein Basisteil 19, welches bei der bevorzugten einteiligen Ausgestaltung der Befestigungsvorrichtung 1 über einen Bandabschnitt 21 mit dem Einsteckteil 3 verbunden ist. Hierzu ist der Bandabschnitt 21 einerseits an dem Schaftende 11 bzw. dem Kopfabschnitt 7 angeformt, andererseits an einem chassisförmigen Abschnitt bzw. Chassis 23 des Basisteils 19.

Das Basisteil 19 weist eine Anlageoberfläche 25 auf, welche dazu vorgesehen ist, gegen ein Trägersubstrat 17 zur Anlage gebracht zu werden, wobei die Anlageoberfläche 25 an dem chassisförmigen Abschnitt 23 bereitgestellt ist. Die Anlageoberfläche 25 ist für eine plane Auflage am Träger 17 plan ausgebildet, i.e. an einer Unterseite des Chassis 23, z.B. Fig. 3.

Auf Seiten der Anlageoberfläche 25 abragend, insbesondere vom Chassis 23, weist das Basisteil 19 eine Anzahl Rastfüße bzw. Rastbeine 27 auf, vorliegend zum Beispiel vier Rastbeine 27. Die Rastbeine 27 sind in einer segmentierten Ringkonfiguration angeordnet und dazu vorgesehen, in eine korrespondierenden Montageöffnung 29 an einem Trägersubstrat 17 eingebracht zu werden und daran zu verrasten, s. z.B. Fig. 12. Zur Verrastung weist insoweit ein jedes Rastbein 27 einen Rasthaken 31 auf.

Mittels der Rastbeine 27 ist weiterhin ein Steckkanal 33 am Basisteil 19 bzw. am chassisförmigen Abschnitt 23 gebildet, in welchen das Einsteckteil 3 durch Einstecken seines Schaftabschnitts 5 einbringbar und somit mit dem Basisteil 19 steckverbindbar ist, s. z.B. Fig. 1, 2, 6, 7, 12. Bevorzugt weist der Schaftabschnitt 5 des Einsteckteils 3 hierbei einen Außendurchmesser auf, welcher derart mit dem Innendurchmesser des Steckkanals 33 korrespondiert, dass eine spielfreie Anlage aneinander ermöglicht ist, somit auch eine positionstreue Verbindung.

Mit der Erfindung ist eine Einsteckrichtung A für das Einsteckteil 3 vorbestimmt, z.B. Fig 2 und Fig. 3, welche von einer Halterungsseite 35 des Basisteils 19 zu der Anlageoberfläche 25 weist. Die Halterungsseite 35 wiederum ist dazu vorgesehen, daran mittels der Befestigungsvorrichtung 1 an einem Trägersubstrat 17 zu fixierendes Verzurrgut 37, i.e. ein Kabel, eine Leitung, ein Bündel daraus o.ä., zu haltern, s. z.B. Fig. 10, Fig. 12, wobei die Halterungsseite 35 eine zur Anlageoberfläche 25 entgegengesetzte Seite des Basisteils 19 ist, z.B. eine Oberseite.

Um ein Einstecken in den Steckkanal 33 seitens der Halterungsseite 35 zu ermöglichen ist eine Mündung 39 desselben seitens der Halterungsseite 35 zugänglich, wozu das rahmenförmige Chassis 23 entsprechend geöffnet ist, z.B. Fig. 7. Die dargestellte bevorzugte Ausgestaltung des Basisteils 19 sieht zum Beispiel ein Chassis 23 vor, welches - in Form einer Einfassung (im allgemeinen Kastenform) - mittels zweier Längsrahmenstege 41a, 41b gebildet ist, zwischen welchen sich - einen anlageseitigen Boden des Chassis 23 bildend - ein Brückensteg 43 erstreckt, z.B. Fig. 1, Fig. 7, an welchem wiederum die Rastbeine 27 als auch die Mündung 39 des Steckkanals 33 gebildet sind, weiterhin ein Abschnitt der Anlageoberfläche 25.

Wie insbesondere die Figuren 4 bis 6 und 8 veranschaulichen, ist die Befestigungsvorrichtung 1 hierbei ausgestaltet, den Kopfabschnitt 7 im Zuge eines Einsteckens des Einsteckteils 3 in das Basisteil 19 sämtlich im Innenraum 45 des chassisförmigen Abschnitts 23 bzw. im Basisteil 19 aufzunehmen (so dass die Befestigungsvorrichtung 1 in dem steckverbundenen Zustand vorteilhaft klein baut), wobei die endseitige Oberfläche des Kopfabschnitts 5 bzw. der zentrale, konvexe Abschnitt 13 freiliegt. Die Oberfläche 13 steht somit für die Anlage eines Binders 47 bereit, z.B. Fig. 8, 9, Fig. 13.

Insbesondere mit Verweis auf die Figuren 9 und 11 bis 13, ist das Basisteil 19 bzw. die Befestigungseinrichtung 1 weiterhin eingerichtet, den Kopfabschnitt 7 des mit dem Basisteil 19 steckverbundenen Einsteckteils 3 gegen ein an den Rastbeinen 27 verrastetes Trägersubstrat 17 in Eingriff bringen zu können und hierbei weiterhin einen Binderabschnitt 49 über den Kopfabschnitt 7, 13 des steckverbundenen Einsteckteils 3 führen und an dem Basisteil 19 derart haltern zu können, dass der Kopfabschnitt 7 bei Verzurren des Binders 47 mittels des darüber geführten und verzurrten Binderabschnitts 49 in Einsteckrichtung A des Einsteckteils 3 gedrängt wird, s. z.B. Fig. 12, 13, weiterhin aber auch - die Verrastung der Befestigungsvorrichtung 1 am Trägersubstrat 17 vorrausgesetzt - das Basisteil 19 in entgegen gesetzte Richtung gedrängt wird.

Zur Ausbildung der damit einhergehenden, erfindungsgemäßen Selbstjustierfähigkeit der Befestigungsvorrichtung 1 weist der chassisförmige Abschnitt 23 bzw. das Basisteil 19 an entgegen gesetzten, stirnseitigen Enden 51a, b bzw. 53a, b (der Längsrahmenstege 41a, 43a) je einen - zur Halterungsseite 35 hin orientiert angeordneten - Querrahmensteg 55a, 55b auf, z.B. Fig. 7. Bei eingestecktem Kopfabschnitt 7 sind die derart bereitgestellten Querstege 55a, b - in Erstreckungsrichtung der Längsrahmenstege 43a, b betrachtet - insoweit je vor und hinter dem Kopfabschnitt 7 angeordnet, z.B. Fig. 8.

Mittels der Quer(rahmen)stege 55a, b, welche sich je von einem Längs(rahmen)steg 43a, b zum anderen erstrecken, werden insoweit Durchführungen 57a, b für einen Binder 47, insbesondere einen Binderbandabschnitt 49 und weiterhin bevorzugt eines Kabelbinders 47, an jeweiligen Stirnseiten 59a, b gebildet, welche ermöglichen, einen Binderbandabschnitt 49 eines Binders 47 - in Einsteckrichtung A betrachtet - zwischen dem Kopfabschnitt 7 und den Querstegen 55a, 55b hindurch fädeln zu können, wobei der Binder 47 über den Kopfabschnitt 7 geführt in Anlage an dem Kopfabschnitt 7 gelangt. Der Kopfabschnitt 7 des steckverbundenen Einsteckteils 3 ragt für die sichere Anlage am Binder 47 ersichtlich etwas über die Sichtlinie der Durchführungen 57a, b hinaus, i.e. in der zur Einsteckrichtung A entgegen gesetzten Richtung, vgl. z.B. Fig. 12. Derart wird ein eingefädelter Binder 49 annähernd w-förmig an der Befestigungsvorrichtung 1 gehaltert und über den Kopfabschnitt 7 geführt, s. Fig. 13.

Wird der Binder 47 nachfolgend durch Verzurren, siehe z.B. Figuren 10 bis 13, gespannt, bevorzugt um ein Verzurrgut 37, versucht dieser, die kürzeste Binderbandverbindung zwischen den Querstegen 55a, b herzustellen und drängt im Zuge dieses Spannens den Kopfabschnitt 7 mittels des Binderabschnitts 49 vorteilhaft in Einsteckrichtung A.

Um eine Druckkraft, die der Kopfabschnitt 7 hierbei erfährt, angedeutet durch die Kraft F_{R} in Fig. 13, für die Fixierung der Befestigungsvorrichtung 1 am Trägersubstrat 17 in dieses einleiten bzw. für die Fixierung aufwenden zu können, weist das Basisteil 19 bzw. dessen chassisförmiger Abschnitt 23 Freisparungen 61a, b auf, durch welche hindurch der Kopfabschnitt 7 - mit den hin zum freien Ende 9 des Schaftabschnitts 7 weisenden Endabschnitten 63 der Kontaktzungen 15 - treten kann, d.h. somit in Anlage am Trägersubstrat 17 gelangen kann, s. z.B. Fig. 13.

Die Freisparungen 61a, b sind insoweit korrespondierend mit einer vorgesehenen und durch den Bandabschnitt 21 vorgegebenen Ausrichtung des Kopfabschnitts 7 (für das Einstecken) gebildet, s. z.B. Fig. 7, vorliegend insoweit an diametral entgegen gesetzten Seiten des Brückenstegs 43 bzw. der Mündung 39 des Steckkanals 33, i.e. je stirnseitig.

Erfindungsgemäß wird mit Verzurren des Binders 47 auch eine Zugkraft auf das Basisteil 19 der am Trägersubstrat 17 verrasteten Befestigungsvorrichtung 1 bewirkt, welche ebenfalls in das Trägersubstrat 17 eingeleitet wird, d.h. über die Rastbeine 27. Diese Kraft wirkt in der zur Druckkraft entgegen gesetzten Richtung, d.h. entgegen der Einsteckrichtung A.

Dies wird nachfolgend insbesondere anhand der Figuren 12 und 13 noch näher erläutert.

Die Figur 12 veranschaulicht die Befestigungsvorrichtung 1 mit steckverbundenem Basisteil 19 und Einsteckteil 3 an einem Trägersubstrat 17 verrastet, wobei an der Halterungsseite 35 weiterhin am Trägersubstrat 17 festzulegendes Verzurrgut 37 zur Anlage gebracht ist, insbesondere auch gegen den Binderabschnitt 49 zur Anlage gelangt, und wobei die Halterungsseite 35 des Basisteils 19 eine entsprechend ausgeformte Lager(schalen)form 65 aufweist. Das Verzurrgut 37 ist weiterhin mittels eines Binders 47 an der Befestigungsvorrichtung 1 verzurrt, wobei der Binder 47, welcher halterungsseitig eine Schlaufe um das Verzurrgut 37 bildet, den Kopfabschnitt 7 erfindungsgemäß in Einsteckrichtung A drängt, i.e. eine Druckkraft F_{R} ausübt, s. Fig. 13.

Die Druckkraft F_{R} wird mittels der elastisch gebildeten Schenkel bzw. Kontaktzungen 15 des Kopfabschnitts 5 nunmehr in das Trägersubstrat 17 eingeleitet, Bezugszeichen 71 in Fig. 13, welche Schenkel 15 hierzu mit ihren Endabschnitten 63 - durch die Freisparungen 61a, b bzw. das geeignet geöffnete Chassis 23 hindurchtretend - in Kontakt bzw. Anlage am Trägersubstrat 17, d.h. an einer Montageseite 67 desselben sind.

Über die in der Aufnahmeöffnung 29 aufgenommenen Rastbeine 27 bzw. deren Rasthaken 31 wird gleichzeitig eine Zugkraft F_{G} auf das Trägersubstrat 17 ausgeübt, s. exemplarisch in Fig. 13 eingezeichnet, welche entgegen gesetzt zu der Druckkraft F_{R} gerichtet ist. Die Zugkraft F_{G} entspricht hierbei jener Kraft, welche seitens des Binders 47 auf die Querrahmenstege 55a, b wirkt und hierüber in das Chassis 23 eingeleitet wird, somit über die mit dem Chassis 23 verbundenen Rasthaken 31 an einer Verrastseite 69 des Trägersubstrats 17 auf dasselbe ausgeübt wird, s. Bezugszeichen 73 in Fig. 3 (die Krafteinleitungsbereiche bezeichnend).

Somit wird einerseits der Kopfabschnitt 7 durch den Binder 47 belastet gegen das Trägersubstrat 17 gedrängt, d.h. an der Montageseite 67, weiterhin die Verrastbeine 27, ebenfalls (mittelbar) durch den Binder 47 belastet, gegen die Verrastseite 69.

Im Zuge dieser Kräfte stellen die Flügel 15 mittels einer elastischen Biegung bzw. Deformation ihrerseits das Kräftegleichgewicht so ein, dass sämtliche Toleranzen ausgeglichen werden, d.h. die Befestigungsvorrichtung 1 justiert sich selbst. Vorteilhaft kann diese Position nachfolgend auch dauerhaft erhalten werden.

### Bezugszeichen

- 1: Befestigungsvorrichtung
- 3: Einsteckteil
- 5: Schaftabschnitt
- 7: Kopfabschnitt
- 9: freies Ende
- 11: weiteres Ende
- 13: zentraler Abschnitt
- 15: Schenkel
- 17: Trägersubstrat
- 19: Basisteil
- 21: Bandabschnitt
- 23: Chassisförmiger Abschnitt
- 25: Anlageoberfläche
- 27: Rastbein
- 29: Montageöffnung
- 31: Rasthaken
- 33: Steckkanal
- 35: Halterungsseite
- 37: Verzurrgut
- 39: Mündung
- 41a, b: Längsrahmensteg
- 43: Brückensteg
- 45: Innenraum
- 47: Binder
- 49: Binderabschnitt
- 51a, b: stirnseitiges Ende
- 53a, b: stirnseitiges Ende
- 55a, b: Querrahmensteg
- 57a, b: Durchführung
- 59a, b: Stirnseite
- 61a, b: Freisparung
- 63: Endabschnitt
- 65: Lagerform
- 67: Montageseite
- 69: Verrastseite
- 71: Druckbelasteter Bereich
- 73: Zugbelasteter Bereich
- A: Einsteckrichtung

## Patentansprüche

1. Befestigungsvorrichtung (1), aufweisend:
- ein Einsteckteil (3) mit einem Schaftabschnitt (5) und einem Kopfabschnitt (7);
- ein Basisteil (19) mit einer Anlageoberfläche (25) und einer dazu entgegen gesetzten Halterungsseite (35);
- wobei das Basisteil (19) seitens der Anlageoberfläche (25) abragend eine Anzahl Rastbeine (27) zur Verrastung an einer Öffnung (29) eines Trägersubstrats (17) aufweist;
- wobei das Basisteil (19) mit dem Einsteckteil (3) steckverbindbar ist durch Einstecken des Schaftabschnitts (5) in einen Steckkanal (33) des Basisteils (19) seitens der Halterungsseite (35) mit einer Einsteckrichtung (A), welche von der Halterungsseite (35) hin zur Anlageoberfläche (25) weist, wobei der Steckkanal (33) mittels der Rastbeine (27) definiert ist; und
- **dadurch gekennzeichnet, dass** die Befestigungsvorrichtung (1) eingerichtet ist, den Kopfabschnitt (7) des mit dem Basisteil (19) steckverbundenen Einsteckteils (3) gegen ein an den Rastbeinen (27) verrastetes Trägersubstrat (17) in Eingriff bringen zu können und hierbei weiterhin einen Binderabschnitt (49) über den Kopfabschnitt (7) des steckverbundenen Einsteckteils (5) führen und an dem Basisteil (19) derart haltern zu können, dass der Kopfabschnitt (7) bei Verzurren des Binders (47) mittels des darüber geführten und verzurrten Binderabschnitts (49) in Einsteckrichtung (A) gedrängt wird, während das Basisteil (19) in entgegen gesetzte Richtung gedrängt wird.

2. Befestigungsvorrichtung (1) nach Anspruch 1, **dadurch gekennzeichnet, dass** die Befestigungsvorrichtung (1) einteilig gebildet ist.

3. Befestigungsvorrichtung (1) nach einem der vorhergehenden Ansprüche, **dadurch gekennzeichnet, dass** das Einsteckteil (3) über einen Bandabschnitt (21) mit dem Basisteil (19) verbunden ist.

4. Befestigungsvorrichtung (1) nach Anspruch 3, **dadurch gekennzeichnet, dass** der Bandabschnitt (21) eine Vorausrichtung des Kopfabschnitts (7) mit dem Basisteil (19) bei einem Einstecken des Einsteckteils (3) in den Basisteil (19) bewirkt.

5. Befestigungsvorrichtung (1) nach einem der vorhergehenden Ansprüche, **dadurch gekennzeichnet, dass** wenigstens eine Freisparung (61a, 61b) im Basisteil (19) gebildet ist, durch welche hindurch der Kopfabschnitt (7) gegen ein Trägersubstrat (17) in Eingriff gelangen kann.

6. Befestigungsvorrichtung (1) nach einem der vorhergehenden Ansprüche, **dadurch gekennzeichnet, dass** der Kopfabschnitt (7) wenigstens ein elastisch ausgebildetes Kontaktelement (15) für einen Eingriff am Trägersubstrat (17) aufweist.

7. Befestigungsvorrichtung (1) nach einem der vorhergehenden Ansprüche, **dadurch gekennzeichnet, dass** das Basisteil (19) an diametral entgegen gesetzten Seiten des Steckkanals (33) je eine Freisparung (61a, 61b) für ein korrespondierendes Kontaktelement (15) des Kopfabschnitts (7) aufweist, wobei der Kopfabschnitt (7) korrespondierend zu dem Schaftabschnitt (5) diametral angeordnete Kontaktelemente (15) aufweist.

8. Befestigungsvorrichtung (1) nach einem der vorhergehenden Ansprüche, **dadurch gekennzeichnet, dass** das Basisteil (19) an entgegen gesetzten Randbereichen je eine Durchführung (57a, b) für einen zu verzurrenden Binder (47) aufweist, wobei der Steckkanal (33) zwischen den Durchführungen (57a, b) gebildet ist.

9. Befestigungsvorrichtung (1) nach einem der vorhergehenden Ansprüche, **dadurch gekennzeichnet, dass** die Befestigungsvorrichtung (1) eingerichtet ist, einen verzurrten Binder (47) mittels der Durchführungen (57a, 57b) und dem Kopfabschnitt (7) w-förmig zu führen und/oder daran zu haltern.

10. Befestigungsvorrichtung (1) nach einem der vorhergehenden Ansprüche, **dadurch gekennzeichnet, dass** das Basisteil (19) an der Halterungsseite (35) eine Aufnahme (65) für Verzurrgut (37) bildet.

11. Befestigungsvorrichtung (1) nach einem der vorhergehenden Ansprüche, **dadurch gekennzeichnet, dass** der Steckkanal (33) einen Durchmesser aufweist derart, dass der eingebrachte Schaftabschnitt (5) an den Rastbeinen (27) an seinem Außenumfang in Anlage gelangt.

12. Befestigungsvorrichtung (1) nach einem der vorhergehenden Ansprüche, **dadurch gekennzeichnet, dass** die Befestigungsvorrichtung (1) aus Kunststoff gefertigt ist.

13. Befestigungsvorrichtung (1) nach einem der vorhergehenden Ansprüche, **dadurch gekennzeichnet, dass** die Befestigungsvorrichtung (1) eingerichtet ist, sich unter Ausgleich von Toleranzen am Trägersubstrat (17) via Verzurren des Binders (49) selbst zu justieren und/oder zu fixieren.

## Claims

1. Fastening device (1), comprising:
- an insertion part (3) having a shaft portion (5) and a head portion (7);
- a base part (19) having an abutment surface (25) and an opposite mounting side (35);
- wherein the base part (19) on the side of the abutment surface (25) comprises a number of protruding latching legs (27) for latching to an opening (29) of a carrier substrate (17);
- wherein the base part (19) is plug-in connectable with the insertion part (3) by inserting the shaft portion (5) into an insertion channel (33) of the base part (19) on the side of the mounting side (35) with an insertion direction (A), which runs from the mounting side (35) towards the abutment surface (25), wherein the insertion channel (33) is defined by means of the latching legs (27); and
**characterized in that**
- the fastening device (1) is arranged to be able to engage the head portion (7) of the insertion part (3) plug-in connected with the base part (19) against a carrier substrate (17) latched to the latching legs (27) and further in this case to lead a binder portion (49) over the head portion (7) of the plug-in connected insertion part (5) and to retain at the base part (19) such that the head portion (7) when lashing the binder (47) by means of the binder portion (49), lead thereover and lashed, is urged in the insertion direction (A) while the base part (19) is urged in the opposite direction.

2. Fastening device (1) according to claim 1, **characterized in that** the fastening device (1) is integrally formed.

3. Fastening device (1) according to one of the preceding claims, **characterized in that** the insertion part (3) is connected with the base part (19) by a band portion (21).

4. Fastening device (1) according to claim 3, **characterized in that** the band portion (21) causes a pre-alignment of the head portion (7) with the base part (19) upon insertion of the insertion part (3) into the base part (19).

5. Fastening device (1) according to one of the preceding claims, **characterized in that** at least one cutout (61a, 61b) is formed in the base part (19) through which the head portion (7) is engageable against a carrier substrate (17).

6. Fastening device (1) according to one of the preceding claims, **characterized in that** the head portion (7) comprises at least one elastically formed contact element (15) for engagement with the carrier substrate (17).

7. Fastening device (1) according to one of the preceding claims, **characterized in that** the base part (19) on diametrically opposite sides of the insertion channel (33) comprises a respective cutout (61a, 61b) for a corresponding contact element (15) of the head portion (7), wherein the head portion (7) comprises contact elements (15) diametrically arranged corresponding to the shaft portion (5).

8. Fastening device (1) according to one of the preceding claims, **characterized in that** the base part (19) at opposite edge regions comprises a respective passage (57a, b) for a binder (47) to be lashed, wherein the insertion channel (33) is formed between the passages (57a, b).

9. Fastening device (1) according to one of the preceding claims, **characterized in that** the fastening device (1) is adapted to lead a lashed binder (47) by means of the passages (57a, 57b) and the head portion (7) in w-shape and/or to fix it thereat.

10. Fastening device (1) according to one of the preceding claims, **characterized in that** the base part (19) forms a receptacle (65) for lashing material (37) on the mounting side (35).

11. Fastening device (1) according to one of the preceding claims, **characterized in that** the insertion channel (33) has a diameter such that the introduced shaft portion (5) comes into abutment on the latching legs (27) on its outer circumference.

12. Fastening device (1) according to one of the preceding claims, **characterized in that** the fastening device (1) is made of plastic.

13. Fastening device (1) according to one of the preceding claims, **characterized in that** the fastening device (1) is adapted to self-adjust and/or to fix on the carrier substrate (17) via lashing of the binder (49) under compensation of tolerances.

## Revendications

1. Dispositif de fixation (1), comportant :
- un élément d'enfichage (3) pourvu d'une portion de tige (5) et d'une portion de tête (7) ;
- un élément de base (19) pourvu d'une surface d'appui (25) et d'une face de retenue (35) opposée à celle-ci ;
- l'élément de base (19) comprenant en saillie du côté surface d'appui (25) un certain nombre de bras d'enclenchement (27) pour l'enclenchement sur une ouverture (29) d'un substrat porteur (17) ;
- l'élément de base (19) pouvant être relié par enfichage à l'élément d'enfichage (3) par enfichage de la portion de tige (5) dans un canal d'enfichage (33) de l'élément de base (19) du côté de la face de retenue (35) avec une direction d'enfichage (A) qui est dirigée depuis la face de retenue (35) vers la surface d'appui (25), le canal d'enfichage (33) étant défini par les bras d'enclenchement (27) ;
**caractérisé en ce que**
le dispositif de fixation (1) est conçu pour pouvoir amener en engagement la portion de tête (7) de l'élément d'enfichage (3) relié par enfichage à l'élément de base (19) contre un substrat porteur (17) enclenché sur les bras d'enclenchement (27) et pour pouvoir en outre mener une portion d'attache (49) par-dessus la portion de tête (7) de l'élément d'enfichage (5) enfiché et la retenir sur l'élément de base (19) de telle sorte que la portion de tête (7) est forcée en direction d'enfichage (A) lors de l'amarrage de l'attache (47) au moyen de la portion d'attache (49) menée par-dessus et amarrée, tandis que l'élément de base (19) est forcé en sens opposé.

2. Dispositif de fixation (1) selon la revendication 1, **caractérisé en ce que** le dispositif de fixation (1) est réalisé d'un seul tenant.

3. Dispositif de fixation (1) selon l'une des revendications précédentes, **caractérisé en ce que** l'élément d'enfichage (3) est relié à l'élément de base (19) par une portion de bande (21).

4. Dispositif de fixation (1) selon la revendication 3, **caractérisé en ce que** la portion de bande (21) assure une pré-orientation de la portion de tête (7) avec l'élément de base (19) lors d'un enfichage de l'élément d'enfichage (3) dans l'élément de base (19).

5. Dispositif de fixation (1) selon l'une des revendications précédentes, **caractérisé en ce qu'**au moins une échancrure (61a, 61b) est formée dans l'élément de base (19), à travers laquelle la portion de tête (7) peut venir en engagement contre un substrat porteur (17).

6. Dispositif de fixation (1) selon l'une des revendications précédentes, **caractérisé en ce que** la portion de tête (7) présente au moins un élément de contact (15) réalisé élastique pour un engagement sur le substrat porteur (17).

7. Dispositif de fixation (1) selon l'une des revendications précédentes, **caractérisé en ce que** sur des côtés diamétralement opposés du canal d'enfichage (33), l'élément de base (19) présente une échancrure respective (61a, 61b) pour un élément de contact correspondant (15) de la portion de tête (7), la portion de tête (7) comprenant des éléments de contact agencés diamétralement en correspondance de la portion de tige (5).

8. Dispositif de fixation (1) selon l'une des revendications précédentes, **caractérisé en ce que** sur des zones de bord opposées, l'élément de base (19) présente une traversée respective (57a, b) pour une attache (47) à amarrer, le canal d'enfichage (33) étant formé entre les traversées (57a, b).

9. Dispositif de fixation (1) selon l'une des revendications précédentes, **caractérisé en ce que** le dispositif de fixation (1) est conçu pour guider en forme de w une attache amarrée (47) au moyen des traversées (57a, 57b) et de la portion de tête (7), et/ou pour l'y retenir.

10. Dispositif de fixation (1) selon l'une des revendications précédentes, **caractérisé en ce que** l'élément de base (19) forme un logement (65) pour des objets à amarrer (37) sur la face de retenue (35).

11. Dispositif de fixation (1) selon l'une des revendications précédentes, **caractérisé en ce que** le canal d'enfichage (33) présente un diamètre tel que la portion de tige (5) introduite vient en appui contre les bras d'enclenchement (27) par sa périphérie extérieure.

12. Dispositif de fixation (1) selon l'une des revendications précédentes, **caractérisé en ce que** le dispositif de fixation (1) est fabriqué en matière plastique.

13. Dispositif de fixation (1) selon l'une des revendications précédentes, **caractérisé en ce que** le dispositif de fixation (1) est conçu pour s'ajuster et/ou se fixer de lui-même sur le substrat porteur (17) par amarrage de l'attache (49) en rattrapant des tolérances.
